(19)

Europäisches
Patentamt
European
Patent Office
Office européen
des brevets

(11) **EP 3 647 019 A1**

(12) **EUROPEAN PATENT APPLICATION**

(43) Date of publication:
06.05.2020 Bulletin 2020/19

(21) Application number: 18204395.0

(22) Date of filing: 05.11.2018

(51) Int Cl.:
*B29C 64/10* (2017.01)      *B01J 23/22* (2006.01)
*B01J 35/04* (2006.01)      *B01J 35/06* (2006.01)
*B01J 37/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
 • **KENNEMA, Marco Oskar**
  **67056 Ludwigshafen (DE)**
 • **LEFEVERE, Jasper**
  **2400 Mol (BE)**
 • **MICHIELSEN, Bart**
  **2400 Mol (BE)**

 • **WALSDORFF, Christian**
  **67056 Ludwigshafen (DE)**
 • **ROMERO VALLE, Miguel Angel**
  **67056 Ludwigshafen (DE)**
 • **SCHARF, Florian**
  **67056 Ludwigshafen (DE)**
 • **BORNINKHOF, Fred**
  **3454 PK De Meern (NL)**
 • **BORCHERT, Holger**
  **67056 Ludwigshafen (DE)**
 • **WEBER, Andreas**
  **67056 Ludwigshafen (DE)**

(74) Representative: **Schuck, Alexander**
 **Patentanwälte**
 **Isenbruck Bösl Hörschler PartG mbB**
 **Eastsite One**
 **Seckenheimer Landstraße 4**
 **68163 Mannheim (DE)**

(54) **CATALYST MONOLITH FOR THE CATALYTIC OXIDATION OF SO2 TO SO3**

(57)      A porous catalyst monolith for the oxidation of SO$_2$ to SO$_3$, composed of alternating layers of linear spaced-apart parallel strands of catalyst material comprising vanadium, at least one alkali metal and sulfate on a silicon dioxide support material, wherein the strands in alternating layers are oriented at an angle to one another, wherein the distance between inner spaced-apart parallel strands is larger than the distance between outer spaced-apart parallel strands in at least a part of the layers of the monolith.

EP 3 647 019 A1

**Description**

The invention relates to a catalyst monolith for the oxidation of $SO_2$ to $SO_3$, a process for the production thereof and also its use in a process for the oxidation of $SO_2$ to $SO_3$. The invention also relates to a bed of randomly arranged catalyst monoliths of the invention in a reactor.

Sulfuric acid is obtained virtually exclusively by oxidation of sulfur dioxide ($SO_2$) to sulfur trioxide ($SO_3$) in the contact/double contact process with subsequent hydrolysis. In this process, $SO_2$ is oxidized by means of molecular oxygen over vanadium-comprising catalysts in a plurality of consecutive adiabatic layers (trays) to form $SO_3$. The $SO_2$ content of the feed gas is usually in the range from 0.01 to 50% by volume and the ratio of $O_2/SO_2$ is in the range from 0.5 to 5. A preferred oxygen source is air. Part of the sulfur dioxide is reacted in the individual trays, with the gas being in each case cooled between the individual trays (contact process). $SO_3$ which has already been formed can be removed from the gas stream by intermediate absorption in order to achieve higher total conversions (double contact process). The reaction occurs, depending on tray, in a temperature range from 340°C to 680°C, with the maximum temperature decreasing with increasing tray number because of the decreasing $SO_2$ content.

Modern-day commercial catalysts usually comprise not only vanadium but also alkali metal compounds, especially potassium compounds but optionally also sodium compounds and/or cesium compounds, and also sulfate. As supports for the abovementioned components, porous oxides, in particular silicon dioxide, $SiO_2$, are usually used. Under reaction conditions, an alkali metal pyrosulfate melt in which the active component vanadium is dissolved in the form of oxo-sulfate complexes is formed on the support material (Catal. Rev. - Sci. Eng., 1978, vol. 17(2), pages 203 to 272). This is referred to as a supported liquid phase catalyst.

The contents of vanadium, calculated as $V_2O_5$, are usually in the range from 3 to 10% by weight, the contents of alkali metals (M), calculated as $M_2O$, are from 5 to 30% by weight, with the molar ratio of alkali metal to vanadium (M/V ratio) usually being in the range from 2 to 6. The content of potassium, calculated as $K_2O$, is usually in the range from 6 to 15% by weight and that of sulfate is in the range from 12 to 30% by weight. In addition, the use of numerous further additional elements, for example chromium, iron, aluminum, phosphorus, manganese and boron, has been reported. $SiO_2$ is predominantly used as porous support material.

The production of such catalysts on an industrial scale is usually carried out by mixing of aqueous solutions or suspensions of the various active components, for example appropriate vanadium compounds ($V_2O_5$, ammonium poly-vanadate, ammonium metavanadate, alkali metal vanadates or vanadyl sulfates) with alkali metal salts (nitrates, carbonates, oxides, hydroxides, sulfates), sometimes together with sulfuric acid and other components which can function as pore formers or lubricants, for example sulfur, starch or graphite, with the support material. The composition resulting therefrom is processed to form the desired shaped bodies in the next step and finally treated thermally (drying and calcination).

US 4,485,190 describes the production of a catalyst for the oxidation of $SO_2$ to $SO_3$, which comprises V, K and a silicon oxide compound. As shaped bodies, mention is made in column 2, lines 30 ff. and column 5, lines 62 ff. of, inter alia, trilobes. In column 6, lines 5 ff., it is said that trilobes have an 18% greater surface area without further information on the size of the shaped bodies being compared with one another being given. The shape of the trilobes mentioned is not described in more detail. Trilobes having through-passages are not mentioned. In the examples, no trilobes are produced.

DE 689 19 235 T2 describes a catalyst for the oxidation of $SO_2$ to $SO_3$, which comprises vanadium, potassium and a silicon oxide compound. On page 2, lines 2 ff., hollow or compact cylinders, multiply lobed cylinders, optionally with spiral depressions, are proposed as shaped bodies.

WO 2017/055565 A1 discloses a method of building a bulk catalytic structure, comprising: shaping a composition comprising a ceramic material to obtain a green structure, wherein said ceramic material comprises a catalytic material and a first and a second inorganic binder; firing the green structure to obtain the bulk catalytic structure, wherein the structure comprises first channels having a length extending in a flow direction and second channels having a length extending in a radial direction, wherein the shaping step comprises extruding the suspension, slurry or paste as fibers by three-dimensional fiber deposition, wherein the fibers form a layered network.

The layered network comprises alternating layers of fibers parallel to one another, wherein the fibers in successive layers are arranged orthogonal or oblique to one another.

In a preferred embodiment, the alternating layers comprise a first alternate layer and a second alternate layer, wherein the fibers in successive ones of the first alternate layer is aligned and wherein the fibers in successive ones of the second alternate layers is aligned.

US 9,597,837 B1 discloses a method for making a three-dimensional porous fluidic device comprising: depositing struts and walls in the three-dimensional geometry using a rapid-prototyping method to construct a three-dimensional porous fluidic device, the three-dimensional porous fluidic device comprising: a fluidic inlet side and an outlet side; a wall surrounding the fluidic device; within the wall of the fluidic device a lattice of a plurality of struts positioned in layers forming a network of pores wherein the struts in the first layer are separated from the struts in a third layer by struts in a second layer which are arranged at an angle to the struts in the first layer and the third layer and wherein the struts in the third layer and the first layer are offset in spacing and wherein the struts within a layer are separated from an adjacent strut within the layer by a space such that channels having a tortuous pathway of interconnecting pores is formed.

Catalysts prepared by robocasting, as disclosed in WO18099957A1, have a large surface area. However, they also have a high pressure drop across the individual monolith bodies, which in turn, result in a high pressure drop across a reactor where these monolith bodies would be placed. Alternatively, a bed of such monoliths may have a low pressure drop in a reactor, but the entrance barrier into the monoliths due to the pressure drop across each individual monolith body would lead to channeling of the gas flow through the reactor, and the improvement in the geometric surface area provided by the robocasting technique would not be fully utilized.

It is an object of the invention to provide catalyst monoliths for the oxidation of $SO_2$ to $SO_3$, which have a very high volume-based geometric surface area. It is known that in the case of vanadium-comprising catalysts for the oxidation of $SO_2$ to $SO_3$, a large volume-based geometric surface area gives a high catalyst activity. Furthermore, the catalyst monoliths should give a very low pressure drop at a very high volume-based geometric surface area.

The object is achieved by a porous catalyst monolith for the oxidation of $SO_2$ to $SO_3$, composed of alternating layers of linear spaced-apart parallel strands of catalyst material comprising vanadium, at least one alkali metal and sulfate on a silicon dioxide support material, wherein the strands in alternating layers are oriented at an angle to one another, wherein the distance between inner spaced-apart parallel strands is larger than the distance between outer spaced-apart parallel strands in at least a part of the layers of the monolith.

The layer pattern and layer organization of the robocasted monolith structures of the invention leads to a significant decrease in pressure drop across each individual monolith body. This results in a lower pressure drop across a reactor filled with the robocasted monoliths of the invention.

In general, the strands are arranged orthogonal or oblique to each other in alternating layers. The orientation of the strands in each consecutive layer can be rotated by a certain angle, e.g. by 90°, 60°, 45° or 36°, clockwise or anticlockwise, with respect to the preceding layer. Channels are formed in the monolith by superposition of individual layers of parallel strands having different orientations. The monoliths of the invention have smaller outer channels and larger inner channels resulting from the different spacing of the strands.

In one embodiment, the strands are arranged in alternating layers comprising first and second alternate layers, wherein the strands in the first alternate layers are each aligned and in the second alternate layers are each aligned, and wherein the strands in the first and second alternate layers are orthogonal to one another. In this case, the monolith can have a square or rectangular cross-section. However, square or rectangular monoliths are less preferred.

In a further embodiment, the strands are arranged in alternating layers comprising first, second, third and forth alternate layers, wherein the strands in the first alternate layers, in the second alternate layers, in the third alternate layers and in the forth alternate layers are each aligned, and wherein the strands in the first, second, third and fourth alternate layers are oriented at 45°, 90° and 135°, respectively, to one another other. Preferably, the catalyst monolith has an octagonal cross-section in this case.

The monolith can have any other suitable cross-section, for example a triangular, pentagonal or circular cross-section. A triangular catalyst monolith can have sequences of three different alternate layers oriented at 60° and 120°, respectively, to one another. A pentagonal monolith may have a sequences of five different alternate layers, oriented at 36°, 72°, 108° and 144°, respectively, to one another.

In a preferred embodiment, the strands are arranged in alternating layers comprising first, second and third alternate layers, wherein the strands in the first alternate layers, in the second alternate layers and in the third alternate layers are each aligned, and wherein the strands in first, second and third alternate layers are oriented at 60° and 120°, respectively, to one another. Preferably, the catalyst monolith has a hexagonal cross-section in this case.

The parallel strands can be parallel or perpendicular to the sides of the hexagon. In a particularly preferred embodiment, the parallel strands are parallel to the sides of the hexagon.

The distance between spaced-apart parallel strands increases form the periphery towards the center in at least a part of the layers of the monolith. Pairs of parallel strands more close to the periphery are less spaced apart than some or all of the remaining pairs of parallel strands more close to the center of the monolith body. Preferably, the distance between spaced-apart parallel strands in a layer increases form the periphery towards the center in all of the layers of the monolith body.

In a preferred embodiment, the parallel strands in a layer have primary and secondary distances, wherein the secondary distance between inner (more central) parallel strands is larger than the primary distance between outer (more peripheral) parallel strands. The ratio of the larger, secondary inter-strand distance to the smaller, primary inter-strand distance is preferably in the range of from 1.2 : 1 to 5 : 1, for example 3 : 1 or 3.5 : 1. In Examples 1 - 5 below, this ratio is 3.5 : 1.

It is also possible to have three or more different inter-strand distances between pairs of parallel strands in a layer.

The number of parallel strands in each individual layer is given in general by the formula:

$$n=a/(b*c)$$

Where "n" is the number of parallel strands in a given layer, determined by the outer diameter "a" of the monolith (measured perpendicular to the orientation of the strands), divided by the product of the diameter "b" of the strands of the strands with a factor "c".

The factor c is in general from 1.5 to 3, preferably from 1.8 to 3 and most preferably from 2 to 3. In examples 7 and 10 below, c = 2.9.

In certain embodiments, the outer diameter a is in the range of from 20 to 40 mm, preferably from 20 to 30 mm. The diameter b of the strands is in the range of from 0.5 to 2 mm, preferably from 1 to 1.75 mm. The number n of parallel strands is for example 9 or 10, including the strands that are part of a polygonal frame defining the perimeter of the layer. The ratio of the inter-strand distances is for example form 2.5 : 1 to 4 : 1, for example from 3 : 1 to 4 : 1.

The present invention also relates to method for producing a porous catalyst monolith for the oxidation of $SO_2$ to $SO_3$, of stacked strands of catalyst material comprising vanadium, at least one alkali metal and sulfate on a silicon dioxide support material of natural or synthetic origin, comprising the following steps:

a) Preparing a suspension paste in a liquid diluent of a catalyst precursor material comprising vanadium, at least one alkali metal and sulfate on a silicon dioxide support material,

b) extruding the paste of step a) through one or more nozzles having a diameter larger than 200 $\mu$m to form strands, and depositing the extruded strands in alternating layers of linear spaced-apart parallel strands, wherein the strands in alternating layers are oriented at an angle to one another, to form a three-dimensional porous monolith precursor,

c) drying the porous monolith precursor to remove the liquid diluent,

wherein the distance between inner spaced-apart parallel strands is larger than the distance between outer spaced-apart parallel strands in at least a part of the layers of the monolith.

Preferably, the parallel strands in each layer are partial strands deposited in a continuous manner as part of one single individual strand, the one single individual strand having corners and changing its direction in the plane of the layer.

In preferred embodiments, the outer periphery of the catalyst monolith is created by depositing in some or all of the layers, preferably in all of the layers, a strand that forms a frame of the layers defining the outer perimeter of the monolith. The outermost strands can thus form part of the frame. The stacked frames of each layer result in a solid lateral wall of the catalyst monolith.

Figure 1 shows the base outer perimeter of a desired hexagon shape of a catalyst monolith.

Figure 2 shows a non-inventive layer design for a hexagonal catalyst monolith prepared using robocasting, wherein the parallel strands are equidistant.

Figure 3 shows a further non-inventive layer design for a hexagonal catalyst monolith prepared using robocasting, wherein the parallel (partial) strands are equidistant and deposited continuously as one single strand.

Figure 4 shows a non-inventive hexagonal catalyst monolith design in a top view with channels perpendicular to the layers. A minimum of 3 layers, according to either Figure 2 or Figure 3, are deposited at 60° and 120°, respectively, to one another.

Figure 5 shows an improved layer pattern for a hexagonal catalyst monolith according to the invention having primary and secondary inter-strand distances.

Figure 6 shows another improved layer pattern for a hexagonal catalyst monolith according to the invention, wherein the parallel (partial) strands are deposited continuously as one single strand and have primary and secondary inter-strand distances.

Figure 7 shows an improved catalyst monolith design in a top view with channels perpendicular to the layers. A minimum of 3 layers, according to either Figure 5 or Figure 6, are deposited at 60° and 120°, respectively, to one another. The parallel strands are oriented perpendicular to the sides of the hexagon.

Figure 8 shows another improved layer pattern for a hexagonal catalyst monolith according to the invention having primary and secondary inter-strand distances.

Figure 9 shows another improved layer pattern for a hexagonal catalyst monolith according to the invention, wherein the parallel (partial) strands are deposited continuously as one single strand and have primary and secondary inter-strand distances.

Figure 10 shows an improved catalyst monolith design in a top view with channels perpendicular to the layers. A minimum of 3 layers, according to either Figure 8 or Figure 9, are deposited at 60° and 120°, respectively, to one another. The parallel strands are oriented parallel to the sides of the hexagon.

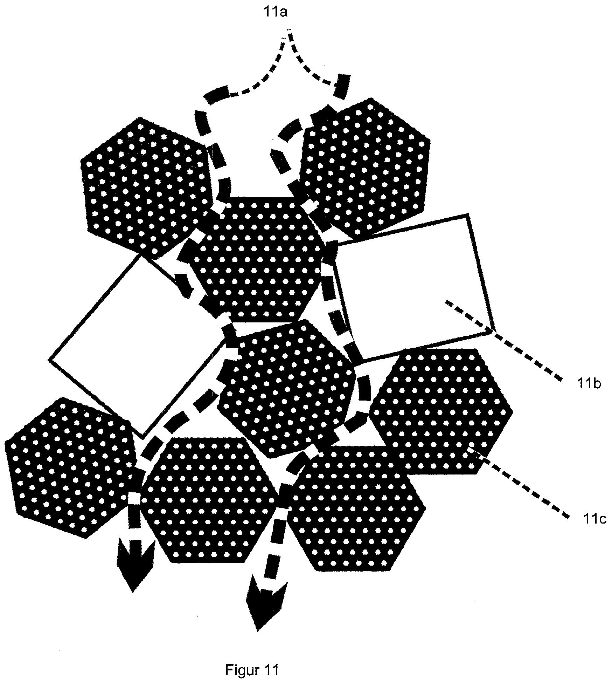

Figure 11 shows the potential flow pattern of a gas flow across a packed bed of non-inventive catalyst monoliths inside a reactor. The illustration shows the gas flow (11a) bypassing the center of the robocasted monolith structures (11b and 11c). In this case the increased surface area of the catalyst monoliths is not utilized due to channeling of the gas flow around the monolith structures.

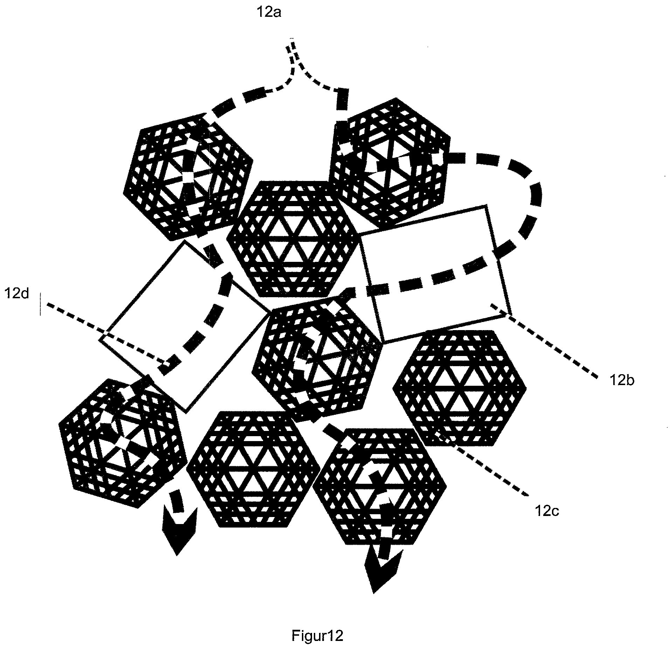

Figure 12 shows the potential flow pattern of a gas flow across a packed catalyst bed of inventtive catalyst monoliths inside a reactor. The illustration shows the gas flow (12a) entering the center of the printed structures (12b and 12c). 12d denotes the flow passing through the center of one of the hexagonal monolith structures. In this case the increased surface area is accessible to the gas flow due to a low pressure drop across each individual monolith structure.

Figure 13 shows, in a perspective view, an example of a robocasted hexagonal catalyst monolith having a state of the art layer design, wherein the parallel (partial) strands are equidistant and deposited continuously as one single strand in each layer. Layers are deposited at 60° and 120°, respectively, to one another. The parallel strands are oriented parallel to the sides of the hexagon.

Figure 14 shows, in a perspective view, an example of a robocasted hexagonal catalyst monolith having an improved layer pattern according to the invention, wherein the parallel (partial) strands are deposited continuously as one single strand and have primary and secondary inter-strand distances. The layers are deposited at 60° and 120°, respectively, to one another. The parallel strands are oriented parallel to the sides of the hexagon.

Figure 15 shows the monolith of Figure 14 in a top view.

The present invention also relates to a randomly packed catalyst bed of the porous catalyst monoliths of the invention.

In general, the catalysts comprise not only vanadium but also alkali metal compounds, especially potassium compounds but optionally also sodium compounds and/or cesium compounds, and also sulfate. Porous oxides such as silicon dioxide, $SiO_2$, are used as support for the abovementioned components.

As inert support materials, use is made of, in particular, porous materials based on $SiO_2$. Here, it is possible to use synthetic variants of $SiO_2$ and also natural forms of $SiO_2$ or mixtures thereof. The content of vanadium, calculated as $V_2O_5$, is generally from 3 to 10% by weight, the content of alkali metals (M), calculated as $M_2O$, is from 5 to 30% by weight, with the molar ratio of alkali metal to vanadium (M/V ratio) usually being in the range from 2 to 6. The content of potassium, calculated as $K_2O$, is usually in the range from 6 to 15% by weight and the content of sulfate is in the range from 12 to 30% by weight. In addition, it is possible for further elements such as chromium, iron, aluminum, phosphorus, manganese and boron to be comprised.

A preferred support material comprises naturally occurring diatomaceous earth. The support material particularly preferably comprises at least two different naturally occurring, uncalcined diatomaceous earths which differ in terms of the structure type of the diatoms on which they are based, with the various structure types being selected from plate-shaped, cylindrical and rod-shaped structure types. Preferred diatomaceous earths is disclosed in WO11128841A1.

The catalysts produced therefrom have a particularly good mechanical stability.

Preferred diatomaceous earths should have a content of aluminum oxide $Al_2O_3$ of less than 5% by weight, preferably less than 2.6% by weight and in particular less than 2.2% by weight. Their content of iron calculated iron(III) oxide $Fe_2O_3$ should be less than 2% by weight, preferably less than 1.5% by weight and in particular less than 1.2% by weight. Their total content of alkaline earth metal oxides (magnesium oxide MgO + calcium oxide CaO) should be less than 1.8% by weight, preferably less than 1.4% by weight and in particular less than 1.0% by weight.

Uncalcined diatomaceous earth has not been treated at temperatures above 500°C, preferably not above 400°C and in particular not above 320°C, before mixing with the active components. A characteristic feature of uncalcined diatomaceous earth is that the material is essentially amorphous, i.e. the content of cristobalite is < 5% by weight, preferably < 2% by weight and particularly preferably < 1% by weight, determined by X-ray diffraction analysis.

Of course, the naturally occurring, uncalcined diatomaceous earth can have been subjected to various treatment steps apart from calcination, for example slurrying, washing, extraction, drying and/or sifting, after mining and before use as support material.

The average volume-based pore diameter, determined by means of mercury porosimetry, of the various diatomaceous earths which can be used should be in the range from 0.1 $\mu$m to 10 $\mu$m, preferably from 0.5 $\mu$m to 9 $\mu$m and in particular from 0.7 $\mu$m to 7 $\mu$m. The average volume-based pore diameter of the mixtures of uncalcined diatomaceous earths should be in the range from 0.5 $\mu$m to 9 $\mu$m, preferably from 0.8 to 7 $\mu$m and in particular from 0.9 to 5 $\mu$m. Here, the shape of the pore distribution of the mixtures according to the invention can deviate significantly from that of the individual diatomaceous earths. Bimodal pore distributions or pore distributions having pronounced shoulders can result, depending on the combination of the various diatomaceous earths. The setting of a particular average volume-based pore diameter within the above-described limits is in principle possible by means of mixing of different diatomaceous earths in various ratios.

The production of the catalysts is effected by mixing aqueous solutions or suspensions of the various active components, for example appropriate vanadium compounds ($V_2O_5$, ammonium polyvanadate, ammonium metavanadate, alkali metal vanadates or vanadyl sulfates) with alkali metal salts (nitrates, carbonates, oxides, hydroxides, sulfates), optionally with sulfuric acid and other components which can function as pore formers or lubricants, for example sulfur, starch or graphite, with the support material. The mixing operation is not restricted further and can, for example, be carried out in a kneader, a screw mixer, a paddle mixer or a "Mix Muller" in which the components are mixed by means of rotating wheels and scrapers.

The resulting composition is, in the next step, extruded by 3D robocasting technique to give the monolith according to the invention, dried and calcined. The type of extruder is not restricted further here. It is possible to use, for example, ram extruders, screw extruders, cascade extruders or planetary gear extruders. Preference is given to using screw extruders, in particular screw extruders having one or two screw shafts. The screw shafts can be optimized in respect of their geometry, for example in respect of their nominal diameter, the flight depth and/or the pitch, so that they produce very uniform extrudates. The material of the screw shaft or its surface and also the material of the barrel or its surface and of the extrusion tool or its surface can, for example, be optimized so that it has a very high resistance to the composition to be extruded. Owing to the low pH of the composition, corrosion- and acid-resistant materials are particularly preferred. The materials to be processed can be continuously or discontinuously supplied to the screw from above via a hopper. Reproducible metering and fill height in the hopper can lead to improved quality of extrusion.

The 3D robocasting technique employed according to the present invention is well established and can be performed as described in US 7,527,671, US 6,027,326, US 6,401,795, Catalysis Today 273 (2016), pages 234 to 243, or Journal of Catalysis 334 (2016), pages 110 to 115, or US 6,993,406.

The 3D robocasting technique can be used with catalyst formulations which can be based on pastes that are currently used in standard extrusion techniques provided the particle size is small enough to pass the extrusion nozzle.

The robocasting technique implies the extruding through one or more nozzles having a diameter of more than 0.5 mm, preferably more than 0.75 mm. Particularly preferably, the diameter of the nozzle should be in the range of from 0.75 mm to 2.5 mm, most preferably from 0.75 mm to 1.75 mm. The nozzle can have any desired cross-section, e.g. circular, elliptical, square, star-shaped, lobed. The maximum diameter is the largest diameter of a non-circular cross-section. One of the main criteria for microextruding is the use of an extrudable paste that has the correct rheological properties for the microextruding technique. The above-mentioned literature gives detailed advice as how to obtain the required rheological properties.

The robocasting process preferably employed according to the present invention can also be described as 3D fiber deposition.

General description of 3DFD

3D Fiber Deposition (3DFD) is used to shape the powder of catalyst precursor material. The 3DFD method is an adaptive manufacturing method whereby a highly loaded paste is extruded by a moving nozzle. By computer controlling the movement of the extrusion head in x, y and z-direction, a porous material can be produced from the extruded fibers or strands layer by layer. After drying, the porous material can be thermally dried.

The main benefit of this technology is the degree of freedom with regard to the porous parameters (fiber thickness, interfiber distance and stacking design).

The typical flow chart for the 3DFD technology consists of the following subsequent steps:

Prepare highly viscous paste
Extrude through thin nozzle

Computer controlled deposition of fibers to form a porous periodic structure
Drying and if necessary reducing

The first important step is to make sure that no large particles are present in the paste. Therefore the particle size of the starting material is checked. If too large particles are present the powder is sieved to obtain the desired particle size. As a rule of thumb, the largest particle (represented by the d99 value) should preferably be at least five times smaller than the nozzle size that will be used, more preferably at least ten times smaller.

In the following step the powder is mixed together with the solvent/diluent (e.g. water), if necessary binder and additives, thus obtaining a viscous paste. A good mixing to achieve a homogenous paste (minimizing agglomerates or the incorporation of air bubbles) is a prerequisite for a smooth and reproducible process. The powder loading of the functional material depends on the specific surface area, the particle size distribution and the powder morphology. Generally, as the particle size of the powder decreases, the viscosity of the paste will increase. Therefore the solid loading needs to be lowered for these powders. Apart from organic or, preferably, inorganic binder(s), rheology modifiers can be added to control the rheological behavior of the paste. In some cases a defoamer is also added to avoid air bubbles in the paste.

After mixing and de-airing, the paste is transferred to the paste reservoir and mounted on the 3DFD set-up. The nozzle, preferably either plastic or metal (below 200 $\mu$m), is attached to the paste reservoir. Paste extrusion is achieved e.g. by a displacement pump or a screw pump. During deposition, it might be necessary to control the drying conditions.

After drying at room conditions (or under controlled atmosphere and temperature), the 3DFD structure is reduced, if necessary. No calcining or sintering at temperatures above 1000°C is necessary.

The drying is preferably performed at a temperature in the range of from 0 to 1000°C, more preferably 0 to 300°C, most preferably 20 to 110°C.

No treatment of the porous catalyst monolith precursor or porous catalyst monolith at temperatures above 1000°C, preferably above 900°C, more preferably above 750°C, is performed.

The monolith of stacked fibers may shrink due to the heat treatment. This shrinkage could be in the range of 5-50% of the printing size of the "green" catalyst body.

The monolith of stacked catalyst fibers is three-dimensionally structured by depositing the extruded fibers in regular, recurring stacking pattern (periodically structured catalyst), to form a three-dimensionally structured porous catalyst monolith precursor.

The sides of the monolith structure may be perforated as a result of printing.

The points where the direction of the extrudate is changed or the layer in which the extrudate is deposited may have a larger diameter than the desired strand diameter. Though undesired, the diameter of an individual strand may also change in a parallel section of the shaped body due to a change in the printing speed.

The fibers or strands preferably have a thickness of 0.2 mm to 2.5 mm, more preferably of 0.75 mm to 2 mm, most preferably 0.75 mm to 1.75 mm.

They are preferably spatially separated from each other by a smaller first (primary) and at least one larger second (secondary) distance, wherein the first distance is determined by the formula:

$$m_1 = b*d$$

wherein ($m_1$), the primary distance between the fibers is determined by the strand diameter b multiplied by a factor d, wherein d is from 0.3 to 2, more preferably from 0.5 to 1.5, most preferably from 0.5 to 1. In examples 7 and 10, d = 0.6667.

The larger secondary distances are calculated by the formula:

$$m_2 = m_1{}^*e$$

wherein e is from 1.2 to 5, preferably 1.5 to 4, more preferably form 2 to 4. In examples 7 and 10, e = 2.333.

The monoliths are generally subjected to a drying step after extrusion. Here, the type of oven is not restricted further. It is possible to use, for example, stationary convection ovens, rotary tube ovens or belt ovens. The duration of drying is generally from 0.5 to 20 hours and the temperature is generally from 50 to 200°C.

The shaped bodies are generally subjected to a calcination step after drying. Here, the type of oven is not restricted further. It is possible to use, for example, stationary convection ovens, rotary tube ovens or belt ovens. The duration of calcination is generally from 0.5 to 20 hours and the temperature is generally from 200 to 800°C.

After the calcination or even at other points during the process for producing the catalyst, it can be advantageous to sort the shaped bodies according to their dimensions and utilize only a suitable size fraction. Such sorting can be effected, for example, by means of suitable sieves. Shaped bodies which are larger or smaller than the desired dimensions can, for example, be recirculated as recycle material to suitable points in the process. It can be advantageous to subject this recycle material to one or more further process steps, for example milling, before recirculation.

The present invention also provides for the use of the shaped catalyst bodies for the oxidation of $SO_2$ to $SO_3$.

The present invention further provides a process for the oxidation of $SO_2$ to $SO_3$, wherein a gas mixture comprising oxygen and sulfur dioxide is brought into contact at a temperature in the range from 340 to 680°C with a bed of the shaped catalyst bodies of the invention.

Tray reactors (see, for example, "H. Müller, Sulfuric Acid and Sulfur Trioxide in Ullmann's Encyclopedia of Industrial Chemistry, Wiley-VCH, 2012"; DOI: 10.1002/14356007.a25_635) are typically used as reactors. These tray reactors have a plurality of reaction trays in which $SO_2$ is brought into contact with shaped catalyst bodies. The reactor typically comprises from 1 to 6, usually from 3 to 5, trays. The tray reactors generally behave approximately adiabatically, i.e. the heat liberated in the oxidation of $SO_2$ to $SO_3$ largely heats the reaction gas. The exothermic oxidation of $SO_2$ to $SO_3$ is limited by thermodynamic equilibrium which is shifted in the direction of the starting materials with increasing temperature. After passage through a tray, the reaction gas is therefore cooled, for example in suitable heat exchangers, before being fed to the next tray. Furthermore, there are processes in which the $SO_3$ formed is largely removed from the reaction gas, for example by absorption in concentrated sulfuric acid, between two trays in order to increase the conversion of remaining $SO_2$ in the subsequent trays.

The concentration of $SO_2$ in the reaction gas before the latter enters the first tray is generally from 2 to 20% by volume; depending on $SO_2$ source, it is typically in the range from 5 to 15% by volume. The concentration of $O_2$ in the reaction gas before the latter enters the first tray is likewise generally 2-20% by volume; depending on $SO_2$ source, it is typically in the range from 5 to 15% by volume. The volume flows are generally from 10 000 to 500 000 standard $m^3/h$, typically from 30 000 to 350 000 standard $m^3/h$. The diameter of the reactors is typically from 2 to 15 m, normally from 3 to 10 m. The volume of the catalytic bed per tray is generally from 10 to 500 $m^3$, usually from 20 to 350 $m^3$. The height of the catalytic bed per tray is generally from 0.3 to 3 m, typically from 0.5 to 2.5 m. The space velocity of gas in standard $m^3/h$, based on the catalyst volume in $m^3$ (GHSV), is generally from 100 to 5000 $h^{-1}$, usually from 500 to 2500 $h^{-1}$. The flow is typically in the laminar range, and the Reynolds number of the flow in the tray is generally from 10 to 1000, typically from 30 to 500. The pressure drop over the bed in a tray is generally from 2 to 100 mbar, typically from 5 to 50 mbar.

It is economically advantageous for the pressure drop over the process, in particular over reactor, heat exchanger and optionally absorption tower, to be low in order to have low costs for compression of the reaction gas and in order to minimize the pressure rating requirements for the components. A catalytic bed which displays a low pressure drop and a high activity is advantageous here.

The invention is illustrated in more detail by the following examples.

Examples

The invention is further illustrated by the following examples.

Pressure drop simulations

Examples 1 to 3

The correlation between pressure drop and catalyst monolith shape was calculated via numerical flow simulation (computational fluid dynamics - CFD), which completely resolves the flow in the void spaces between the solid catalyst structures. CFD simulations are a standard tool to calculate the pressure drop in complex 3D geometries. First, the geometry of the 3D micro-extruded (robocasted) catalyst monolith is created. For this purpose, a CAD (Computer Aided Design) model of a single catalyst body is created with a CAD program. For the calculation of the internal pressure drop the porous monoliths were virtually placed in tubes with the exact same cross-section, to exclude bypass flow around the monoliths. Pressure drop calculations were performed by simulating air flow at ambient temperature and different gas space velocities (GHSV, gas hourly space velocity). Values for the thermodynamic and transport properties of air at a constant operating pressure of 1 bar and a temperature of 20°C were taken from the scientific literature.

Example 1

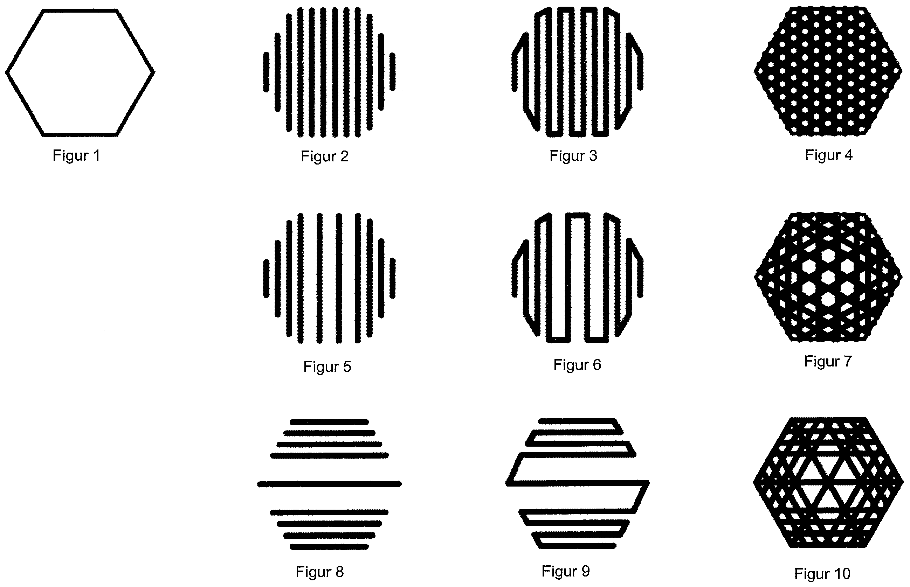

Comparative hexagonal catalyst monolith; the layer structure of the catalyst monolith is shown in Figure 4.

Strand diameter: 1.293 mm

Inter-strand distance: 0.862 mm
Smallest cross-sectional diameter: 25 mm
Porosity across shape geometry in the direction of channels $\varepsilon$ = 0.464
Surface area/ volume: 1478 $m^2/m^3$
Consecutive layers printed 24
Pressure drop of a single monolith (no bypass around monolith), monolith inside a tube with the same cross section
Material: air (constant material properties)

$$\text{Density: } \rho = 1.205 \text{ kg/m}^3$$

$$\text{Viscosity: } \eta = 1.82E\text{-}05 \text{ Pa*s}$$

$$\text{Empty pipe velocity: } v0 \text{ [m/s]} = \{0.12, 0.25, 0.5, 1, 2, 4\}$$

Example 2

Inventive hexagonal catalyst monolith; the layer structure of the catalyst monolith is shown in Figure 7.

Fiber diameter: 1.293 mm

Primary inter-fiber distance: 0.862 mm

Secondary inter-fiber distance: 3.017 mm

Smallest cross-sectional diameter: 25 mm

Porosity across shape geometry in the direction of channels: $\varepsilon$ = 0.56

Surface area/ volume: 1235 $m^2/m^3$

Consecutive layers printed: 24

Factor c: 2.9

Factor d: 0.6667

Factor e: 2.333

Pressure drop of a single monolith (no bypass around pellet), monolith inside a tube with the same cross section

Gas: air (constant material properties)

$$\text{Density: } \rho = 1.205 \text{ kg/m}^3$$

$$\text{Viscosity: } \eta = 1.82E\text{-}05 \text{ Pa*s}$$

$$\text{Empty pipe velocity: } v0 \text{ [m/s]} = \{0.12, 0.25, 0.5, 1, 2, 4\}$$

Example 3

Inventive hexagonal catalyst monolith; the layer structure of the catalyst monolith is shown in Figure 10.

Strand diameter: 1.293 mm

Primary inter-fiber distance: 0.862 mm

Secondary inter-fiber distance: 3.017 mm

Smallest cross-sectional diameter: 25 mm

Porosity across shape geometry in the direction of channels $\varepsilon$= 0.6

Surface area/ volume: 1114 $m^2/m^3$

Consecutive layers printed: 24

Factor c: 2.9

Factor d: 0.6667

Factor e: 2.333

Pressure drop of a single monolith (no bypass around monolith), monolith inside a tube with the same cross section

Gas: air (constant material properties)

$$\text{Density: } \rho = 1.205 \text{ kg/m}^3$$

$$\text{Viscosity: } \eta = 1.82\text{E-05 Pa*s}$$

$$\text{Empty pipe velocity: } v0 \text{ [m/s]} = \{0.12, 0.25, 0.5, 1, 2, 4\}$$

The results of the pressure drop simulations are summarized in Table 1.

Table 1

| Pipe Velocity in an empty pipe (m/s) | Pressure Drop (mbar/m) | | |
|---|---|---|---|
| | Example 1 | Example 2 | Example 3 |
| 0.12 | 1.76 | 0.78 | 0.59 |
| 0.25 | 4.11 | 1.98 | 1.57 |
| 0.5 | 10.36 | 5.53 | 4.63 |
| 1 | 28.95 | 16.89 | 14.39 |
| 2 | 94.75 | 53.32 | 45.14 |
| 4 | 296.17 | 171.67 | 139.21 |

Extruded monoliths

Example 4

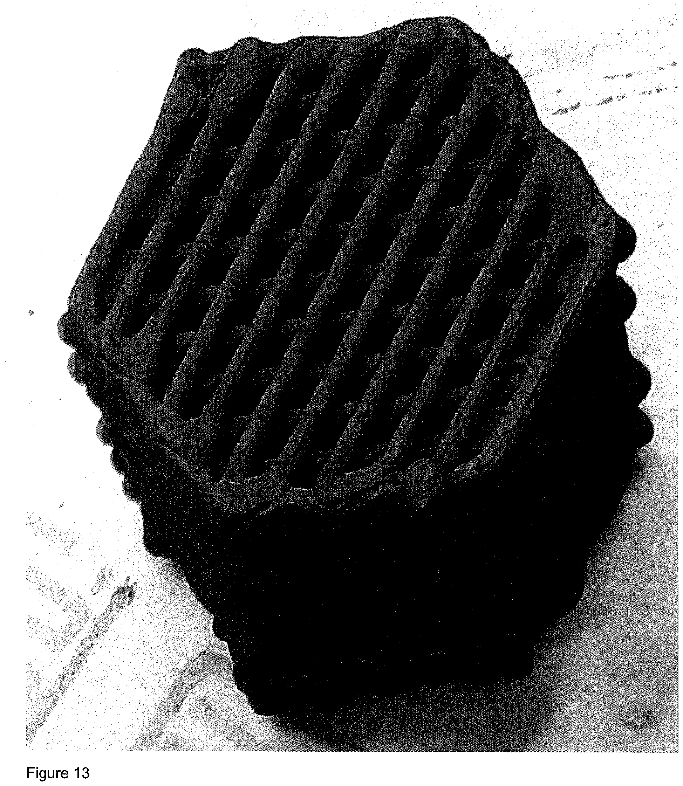

Comparative hexagonal catalyst monolith shown in Figure 13

Material: Diatomaceous earth containing a vanadium active phase with sodium and potassium as promotor compounds

Fiber diameter before heat treatment: 1.5 mm

Inter-fiber distance before heat treatment before heat treatment: 1.5 mm

Smallest cross-sectional diameter: 25 mm

Consecutive layers printed: 22

Shrinkage on heat treatment: 20%

Pressure during extrusion: 50-70 N

Example 5

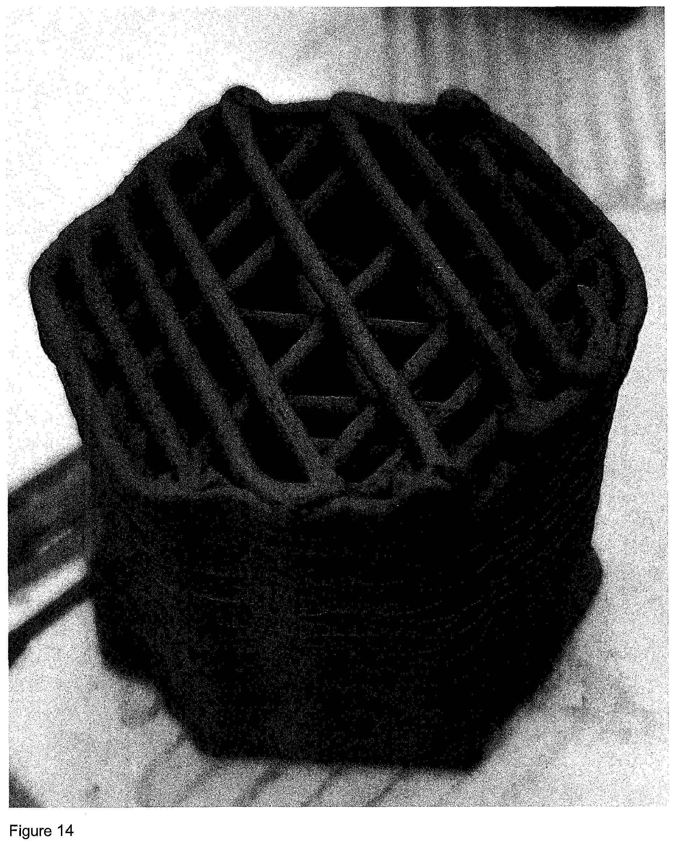

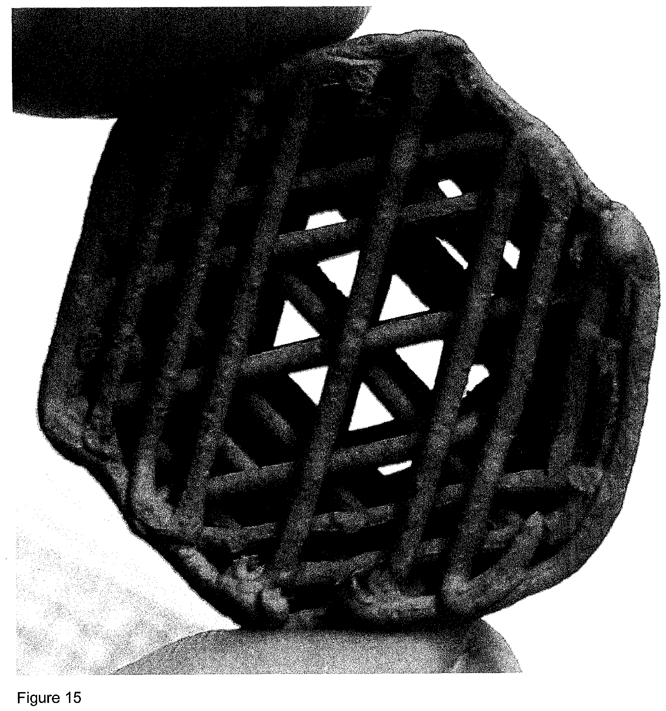

Inventive hexagonal catalyst monolith shown in Figures 14 and 15

Material: Diatomaceous earth containing a vanadium active phase with sodium and potassium as promotor compounds

Fiber diameter before heat treatment: 1.5 mm

Primary inter-fiber distance before heat treatment: 1.5 mm

Secondary inter-fiber distance before heat treatment: 4.5 mm

Smallest cross-sectional diameter: 25 mm

Consecutive layers printed: 22

Shrinkage on heat treatment: 20%

Pressure during extrusion: 50-70 N

**Claims**

1.   A porous catalyst monolith for the oxidation of $SO_2$ to $SO_3$, composed of alternating layers of linear spaced-apart parallel strands of catalyst material comprising vanadium, at least one alkali metal and sulfate on a silicon dioxide support material, wherein the strands in alternating layers are oriented at an angle to one another, wherein the distance between inner spaced-apart parallel strands is larger than the distance between outer spaced-apart parallel strands in at least a part of the layers of the monolith.

2.   The monolith of claim 1, wherein the strands are arranged in alternating layers comprising first, second and third alternate layers, wherein the strands in the first alternate layers, in the second alternate and in the third alternate layers are each aligned, and wherein the strands in the alternate layers are oriented at 60° and 120°, respectively, to one another.

3.   The monolith of claim 2, wherein the catalyst monolith has a hexagonal cross-section.

4.   A method for producing a porous catalyst monolith for the oxidation of $SO_2$ to $SO_3$, of stacked strands of catalyst material comprising vanadium, at least one alkali metal and sulfate on a silicon dioxide support material, comprising the following steps:

   a) preparing a suspension paste in a liquid diluent of a catalyst precursor material comprising vanadium, at least one alkali metal and sulfate on a silicon dioxide support material,
   b) extruding the paste of step a) through one or more nozzles having a diameter larger than 200 $\mu$m to form strands, and depositing the extruded strands in alternating layers of linear spaced-apart parallel strands, wherein the strands in alternating layers are oriented at an angle to one another, to form a three-dimensional porous monolith precursor,

c) drying and calcining the porous monolith precursor,

wherein the distance between inner spaced-apart parallel strands is larger than the distance between outer spaced-apart parallel strands in at least a part of the layers of the monolith.

5. The method of claim 4, wherein the strands are deposited in alternating layers comprising first, second and third alternate layers, wherein the strands in the first alternate layers, in the second alternate and in the third alternate layers are each aligned, and wherein the strands in the alternate layers are oriented at 60° and 120°, respectively, to one another.

6. The method of claim 5, wherein the catalyst monolith has a hexagonal cross-section.

7. The method according to claim 5 or 6, wherein parallel strands are deposited continuously as partial strands of one single individual strand in each layer.

8. The method according to claim 5 or 6, wherein more than one layer of the catalyst monolith is deposited continuously as one single individual strand.

9. The method according to any one of claims 5 to 8, wherein the outer periphery of the catalyst monolith is created by depositing in some or all of the layers a strand that forms a frame of the layer defining the outer periphery of the catalyst monolith.

10. A three-dimensional porous catalyst monolith of stacked catalyst strands, obtainable by the method according to one of claims 5 to 9.

11. The use of the shaped catalyst body as defined in any of claims 1 to 10 for the oxidation of $SO_2$ to $SO_3$.

12. A process for the oxidation of $SO_2$ to $SO_3$, wherein a gas mixture comprising oxygen and sulfur dioxide is brought into contact at a temperature in the range from 340 to 680°C with a bed of shaped catalyst bodies according to any of claims 1 to 10.

13. A randomly packed catalyst bed of porous catalyst monolith of stacked catalyst strands according to any of claims 1 to 3 and 10.

Figur 4

Figur 7

Figur 10

Figur 3

Figur 6

Figur 9

Figur 2

Figur 5

Figur 8

Figur 1

Figur 11

11a

11b

11c

Figur12

12a

12b

12c

12d

Figure 13

Figure 14

Figure 15

Europäisches
Patentamt

European
Patent Office

Office européen
des brevets

# EUROPEAN SEARCH REPORT

Application Number

EP 18 20 4395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHANNON L. TAYLOR ET AL: "Iron and Nickel Cellular Structures by Sintering of 3D-Printed Oxide or Metallic Particle Inks? : Iron and Nickel Cellular Structures by Sintering...", ADVANCED ENGINEERING MATERIALS., vol. 19, no. 11, 1 November 2017 (2017-11-01), page 1600365, XP055579855, DE ISSN: 1438-1656, DOI: 10.1002/adem.201600365 * figure 3 * | 1-13 | INV. B29C64/10 B01J23/22 B01J35/04 B01J35/06 B01J37/00 |
| A,D | US 9 597 837 B1 (CESARANO III JOSEPH [US] ET AL) 21 March 2017 (2017-03-21) * figures * | 1-13 | |
| A | WO 2018/099956 A1 (BASF SE [DE]) 7 June 2018 (2018-06-07) * claims * | 1-13 | |
| A | US 2004/170804 A1 (NIKNAFS HASSAN S [US] ET AL) 2 September 2004 (2004-09-02) * figures 4,5 * | 1-13 | TECHNICAL FIELDS SEARCHED (IPC) B01J B29C |

The present search report has been drawn up for all claims

| Place of search | Date of completion of the search | Examiner |
|---|---|---|
| Munich | 11 April 2019 | Zieba, Roman |

**ANNEX TO THE EUROPEAN SEARCH REPORT
ON EUROPEAN PATENT APPLICATION NO.**

EP 18 20 4395

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2019

| Patent document cited in search report | | Publication date | Patent family member(s) | | Publication date |
|---|---|---|---|---|---|
| US 9597837 | B1 | 21-03-2017 | NONE | | |
| WO 2018099956 | A1 | 07-06-2018 | WO 2018099956 | A1 | 07-06-2018 |
| | | | WO 2018099957 | A1 | 07-06-2018 |
| US 2004170804 | A1 | 02-09-2004 | AT 401953 | T | 15-08-2008 |
| | | | CA 2534830 | A1 | 10-03-2005 |
| | | | CN 1842369 | A | 04-10-2006 |
| | | | EP 1658134 | A1 | 24-05-2006 |
| | | | ES 2311170 | T3 | 01-02-2009 |
| | | | JP 4351252 | B2 | 28-10-2009 |
| | | | JP 2007503980 | A | 01-03-2007 |
| | | | US 2004170804 | A1 | 02-09-2004 |
| | | | WO 2005021152 | A1 | 10-03-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4485190 A
- DE 68919235 T2
- WO 2017055565 A1
- US 9597837 B1
- WO 18099957 A1

- WO 11128841 A1
- US 7527671 B
- US 6027326 A
- US 6401795 B
- US 6993406 B

**Non-patent literature cited in the description**

- *Catal. Rev. - Sci. Eng.,* 1978, vol. 17 (2), 203-272
- *Catalysis Today,* 2016, vol. 273, 234-243
- *Journal of Catalysis,* 2016, vol. 334, 110-115

- **H. MÜLLER.** Sulfuric Acid and Sulfur Trioxide in Ullmann's Encyclopedia of Industrial Chemistry. Wiley-VCH, 2012